# EUROPÄISCHE PATENTSCHRIFT

(11) **EP 0 463 302 B1**
(45) Veröffentlichungstag und Bekanntmachung des Hinweises auf die Patenterteilung: **10.11.1993**
(21) Anmeldenummer: 91105404.7
(22) Anmeldetag: 05.04.1991
(51) Int. Cl.: F16K 7/06

(54) **Quetschhahn**
Pinchcock
Robinet à serrage

(30) Priorität: 22.06.1990 DE 4019889
(43) Veröffentlichungstag der Anmeldung: 02.01.1992
(73) Patentinhaber: Mogler, Joachim, D-74016 Heilbronn/N. (DE)
(72) Erfinder: Gaul, Klaus, W-6926 Kirchhardt (DE); Mogler, Joachim, W-7100 Heilbronn (DE); Swaczyana, Gerd, W-7101 Untereisesheim (DE); Wiedmann, Helmut, W-7100 Heilbronn (DE)
(74) Vertreter: Hoeger, Stellrecht & Partner

(56) Entgegenhaltungen:
- CH-A- 368 352
- DD-A- 254 236
- DE-A- 2 257 161
- DE-A- 2 435 912
- DE-U- 7 029 750
- US-A- 3 515 170
- US-A- 3 550 900
- US-A- 3 920 215

## Beschreibung

Die Erfindung betrifft einen Quetschhahn nach dem Oberbegriff des Patentanspruchs 1.

Ein derartiger Quetschhahn ist aus der CH-PS 368 352 bekannt. Der bekannte Quetschhahn ist auf ein durchgehendes Schlauchstück aufgesetzt. Die Verbindung dieses Hahnes mit Anschlußleitungen ist nicht möglich.

Quetschhähne mit Gehäusen aus Metall oder Kunststoff und einer Kugel als Quetschelement sind aus DE-GM 70 29 750 und DD-PS 254 236 bekannt, wobei in beiden Fällen die Herstellung des Quetschhahnes, insbesondere eines Gehäuses einen erheblichen Aufwand erfordert. Auch bei diesen Quetschhähnen ist eine Verbindung mit Anschlußleitungen nur unter Verwendung besonderer Dicht- und Anschlußmittel möglich.

Es ist Aufgabe der Erfindung, einen gattungsgemäßen Quetschhahn so zu verbessern, daß er in einfacher Weise herstellbar ist und mit Anschlußleitungen verbunden werden kann.

Die Aufgabe wird erfindungsgemäß durch die im Kennzeichnungsteil des Patentanspruchs 1 stehenden Merkmale gelöst.

Die nachstehende Beschreibung einer bevorzugten Ausführungsform der Erfindung dient im Zusammenhang mit beiliegender Zeichnung der weiteren Erläuterung. Es zeigen:
- Figur 1: eine schaubildliche Ansicht eines Quetschhahnes;
- Figur 2: eine auseinandergezogene Darstellung des Quetschhahnes aus Figur 1;
- Figur 3: eine Schnittansicht des Hahnes aus Figur 1 und 2 in Offenstellung und
- Figur 4: eine Schnittansicht des Hahnes aus Figur 1 und 2 in Schließstellung.

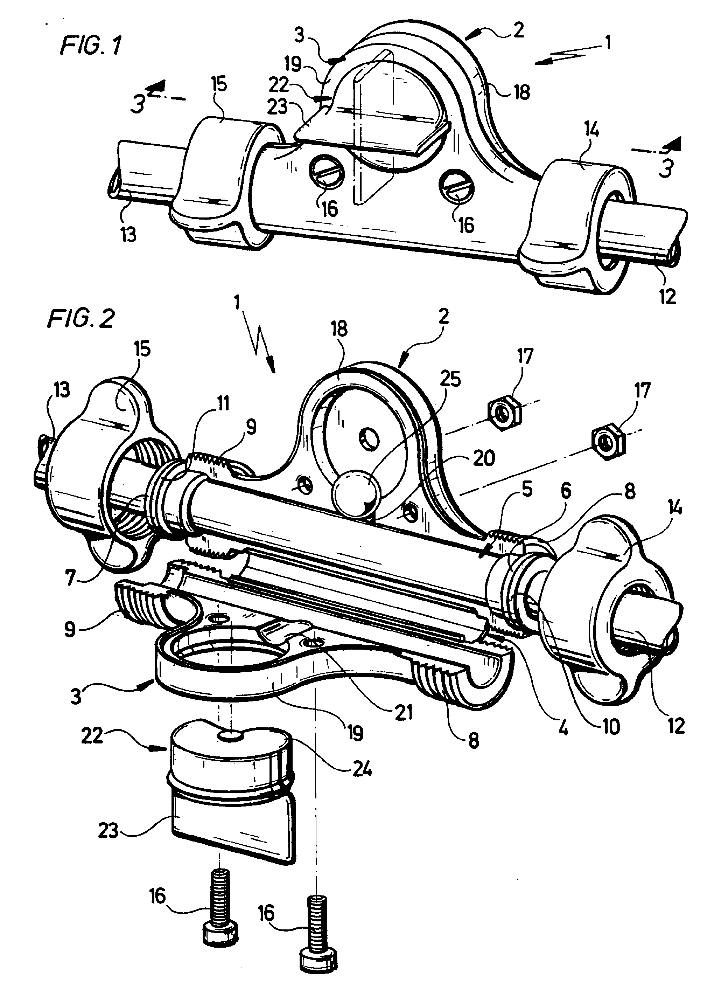

Wie aus der Zeichnung ersichtlich, umfaßt ein Quetschhahn 1, der insbesondere in Leitungen für Bier oder andere kohlensäurehaltigen Getränke einsetzbar ist, ein aus zwei im wesentlichen spiegelbildlichen Kunststoff-Formteilen 2 und 3 bestehendes Gehäuse, wobei die Teile 2 und 3 durch ein übliches Filmscharnier 4 (Figur 2) klappbar miteinander verbunden sind. Die Kunststoff-Formteile 2, 3 umschließen ein elastisch-flexibles Schlauchstück 5, das ebenfalls als Formteil, beispielsweise aus Silikongummimaterial, ausgebildet ist und an seinen Enden jeweils einen Flansch 6 bzw. 7 aufweist. Die Flansche 6, 7 sind in entsprechende, mit Außengewinde versehene Endteile 8 bzw. 9 des Gehäuses 1 eingepaßt. Mit den Flanschen 6, 7 werden entsprechende Flansche 10, 11 von Leitungen 12, 13 ausgerichtet und mit Hilfe von Schraubgliedern 14, 15, die auf die Außengewinde der Endteile 8, 9 passen, flüssigkeits- und gasdicht verbunden. Da das Schlauchstück 5 und seine Flansche 6, 7 aus elastisch-flexiblem Material, z. B. Silikongummi, bestehen, kann gewöhnlich auf das Einschalten besonderer Dichtungsscheiben verzichtet werden. Nach dem Zusammenklappen der beiden Kunststoff-Formteile 2 und 3 aus der in Figur 2 dargestellten Position in die Position gemäß Figur 1 werden diese beiden, das Schlauchstück 5 umschließenden Teile 2, 3 durch Schrauben 16 und Muttern 17 fest miteinander verbunden.

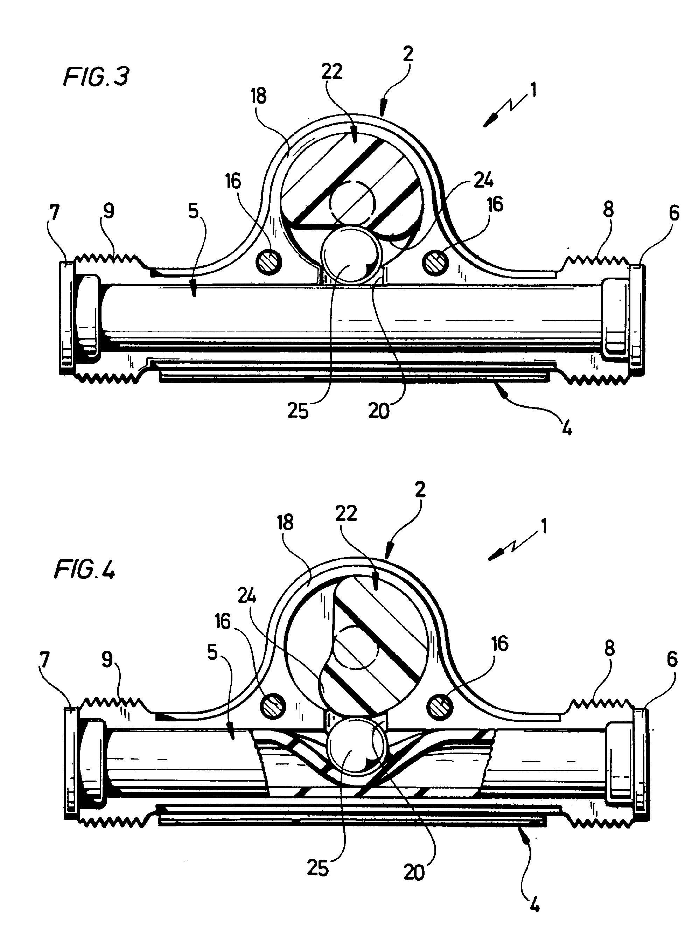

Beide Gehäuseteile 2, 3 umfassen jeweils eine radial verlaufende Verbreiterung 18 bzw. 19, wobei diese Verbreiterungen in ihren Außen- und Innenkonturen im wesentlichen deckungsgleich sind. In Führungsbahnen 20, 21 der Verbreiterungen 18, 19 ist als Quetschelement eine Kugel 25, beispielsweise eine übliche Kugellagerkugel aus Stahl, in einer quer zur Längsachse des Schlauchstückes 5 verlaufenden Richtung verschieblich. In eine kreiszylindrische Aussparung der Verbreiterungen 18, 19 ist ein komplementäres Betätigungsglied 22 drehbar eingesetzt, das an seiner Außenseite einen Handgriff 23 und an seiner Innenseite einen um die Drehachse des Gliedes verschwenkbaren Nocken 24 aufweist, dessen wirksame Kontur am besten aus den Figuren 3 und 4 ersichtlich ist. Das Betätigungsglied 22 ist mit dem Griff 23 und dem Nocken 24 ebenfalls als Kunststoff-Formteil ausgebildet. Die drehbare Halterung des Betätigungsgliedes 22 in den Verbreiterungen 18, 19 erfolgt dadurch, daß es unter Schnappwirkung in die eine Verbreiterung, beispielsweise die Verbreiterung 19, eingerastet wird.

Beim Verdrehen des Betätigungsgliedes 22 um seine senkrecht zur Längsachse des Schlauchstückes und zur Verschieberichtung der Kugel 25 ausgerichtete Drehachse greift der Nocken 24 an der Kugel 25 in der aus Figur 3 und 4 ersichtlichen Weise an. In Figur 3 nimmt die Kugel 25 ihre eine Endlage ein, in der sie von der elastischen Vorspannkraft der Wand des Schlauchstückes 5 gehalten ist. Wenn der Nocken 24 in die Position gemäß Figur 4 verdreht ist, drückt er die Kugel 25 zwangsweise auf ihrer Verschiebebahn nach einwärts, so daß die Kugel die eine Wand des Schlauchstückes 5 gegen die gegenüberliegende Wand preßt und hierdurch der Hahn dicht verschlossen ist. Beim Zurückdrehen des Nockens 24 in die Position gemäß Figur 3 weicht die an der Kugel 25 anliegende Wand des Schlauchstückes 5 elastisch zurück und nimmt die Kugel 25 in ihre Ausgangslage mit.

Wie in Figur 3 und 4 dargestellt, ist zur Überführung des Quetschhahnes von seiner Offenstellung (Figur 3) in seine Schließstellung (Figur 4) und umgekehrt eine Drehbewegung des Nockens 24 von lediglich etwa 90° erforderlich.

Durch die Zwischenschaltung der Kugel 25 zwischen Nocken 24 und Schlauchstück 5 erreicht man eine vorteilhafte Materialschonung des Schlauchstücks 5, die nicht eintreten würde, wenn der sich bewegende Nocken 24 direkt reibend am Schlauchstück 5 angreifen würde. Im Prinzip wäre jedoch, unter Inkaufnahme dieses Nachteils, auch ein unmittelbares Angreifen des Nockens 24 am Schlauchstück 5 denkbar.

## Patentansprüche

1. Quetschhahn mit einem Gehäuse (2, 3), mit einem im Gehäuse angeordneten Schlauchstück (5) aus elastisch-flexiblem Material, mit einem im Gehäuse in einer quer zur Längsachse des Schlauchstückes verlaufenden Richtung verschieblichen, an der Außenseite des Schlauchstückes angreifenden Quetschelement (25), mit einem Betätigungsglied (22) zum Verschieben des Quetschelementes und mit einem am Betätigungsglied angeordneten, am Quetschelement angreifenden Nocken (24), der um eine senkrecht zur Längsachse des Schlauchstückes und zur Verschieberichtung des Quetschelementes ausgerichtete Achse drehbar ist,
**dadurch gekennzeichnet**, daß das Quetschelement eine Kugel (25) ist;
daß das Gehäuse aus zwei im wesentlichen spiegelbildlichen Kunststoff-Formteilen (2, 3) besteht und der ebenfalls als Kunststoff-Formteil ausgebildete Nocken (24) in dem einen Formteil (3) des Gehäuses drehbar gelagert ist,
daß das ebenfalls als Formteil ausgebildete Schlauchstück (5) an seinen Enden Dichtungsflansche (6, 7) aufweist,
daß diese Dichtungsflansche (6, 7) in entsprechende, mit Außengewinde versehene Endteile (8, 9) der Kunststoff-Formteil (2, 3) eingepaßt sind, und
daß mit den Dichtungsflanschen (6, 7) Flansche (10,11) von Anschlußleitungen (12, 13) durch Schraubglieder (14, 15), die auf die Außengewinde der Endteile (8, 9) passen, unmittelbar flüssigkeits- und gasdicht verbindbar sind.

2. Quetschhahn nach Anspruch 1, dadurch gekennzeichnet, daß die beiden Kunststoff-Formteile (2, 3) durch ein Filmscharnier (4) miteinander klappbar verbunden sind.

3. Quetschhahn nach Anspruch 1, dadurch gekennzeichnet, daß das Betätigungsglied (22) mit dem Nocken (24) in dem einen Kunststoff-Formteil (3) des Gehäuses drehbar eingerastet ist.

4. Quetschhahn nach Anspruch 1, dadurch gekennzeichnet, daß am Betätigungsglied (22) ein Griff (23) einstückig ausgebildet ist.

5. Quetschhahn nach Anspruch 1, dadurch gekennzeichnet, daß er durch eine Drehbewegung des Nockens (24) um etwa 90° aus seiner Schließ- in seine Offenstellung und umgekehrt verbringbar ist.

6. Quetschhahn nach Anspruch 1, dadurch gekennzeichnet, daß das Schlauchstück (5) aus Silikonmaterial besteht.

## Claims

1. A pinchcock with a housing (2,3), with a hose part (5) made of elastically flexible material and positioned in the housing, with a pinching component (25) which is movable in the housing in a direction at right angles to the longitudinal axis of the hose part and acts on the outside of the hose part, with an operating element (22) to move the pinching component and with a cam (24) which is positioned on the operating element, acts on the pinching component and is rotatable around an axis aligned perpendicular to the longitudinal axis of the hose part and to the direction of movement of the pinching component,
**characterised in that** the pinching component is a ball (25);
in that the housing consists of two essentially mirror-image plastics mouldings (2,3), and the cam (24), likewise in the form of a plastics moulding, can be pivoted in one of the mouldings (3) of the housing,
in that the hose part (5), likewise in the form of a plastics moulding, has sealing flanges (6,7) at its ends,
in that these sealing flanges (6,7) are fitted into corresponding end parts (8,9), provided with an external thread, of the plastics mouldings (2,3), and
in that flanges (10,11) of connecting pipes (12,13) can be directly connected to the sealing flanges (6,7) by means of screw components (14,15) which fit onto the external threads of the end parts (8,9), in a manner as to prevent the escape or entrance of liquid or gas.

2. A pinchcock as claimed in Claim 1, characterised in that the two plastics mouldings (2,3) are swivel-mountably connected to each other by means of an integral hinge (4).

3. A pinchcock as claimed in Claim 1, characterised in that the operating element (22) with the cam (24) is rotatably engaged in one of the plastics mouldings (3) of the housing.

4. A pinchcock as claimed in Claim 1, characterised in that a handle (23) is constructed in one piece on the operating element (22).

5. A pinchcock as claimed in Claim 1, characterised in that it can be taken from its closed to its open position and vice versa by means of a rotary movement of approximately 90° of the cam (24).

6. A pinchcock as claimed in Claim 1, characterised in that the hose part (5) is made of silicone material.

## Revendications

1. Robinet à serrage comprenant un boîtier (2, 3), un élément de tube souple (5) en matière élastique flexible disposé dans le boîtier, un élément de serrage (25) pouvant coulisser dans une direction transversale à l'axe longitudinal du tube souple et agissant sur le côté extérieur du tube souple un élément d'actionnement (22) servant au coulissement de l'élément de serrage, et une came (24) agencée sur l'organe d'actionnement et agissant sur l'élément de serrage, ladite came pouvant tourner autour d'un axe orienté perpendiculairement à l'axe longitudinal de l'élément de tube souple et à la direction de coulissement de l'élément de serrage,
caractérisé en ce que l'élément de serrage est une bille (25);
en ce que le boîtier se compose de deux pièces moulées en plastique (2, 3), sensiblement symétriques en miroir, et la came (24), également réalisée sous la forme d'une pièce moulée en matière plastique, est montée à rotation dans l'une des pièces moulées (3) du boîtier,
en ce que l'élément de tube souple (5), également réalisé sous forme d'une pièce moulée, comporte des brides d'étanchéité (6, 7) à ses extrémités,
en ce que ces brides d'étanchéité (6, 7) sont emboîtées dans des parties d'extrémités correspondantes (8, 9), pourvues de filets extérieurs, des pièces moulées en matière plastique (2, 3), et
en ce que des brides (10, 11) de conduites de raccord (12, 13) peuvent être reliées immédiatement d'une manière étanche aux liquides et aux gaz aux brides d'étanchéité (6, 7) par des organes filetés (14, 15) qui s'adaptent sur les filets extérieurs des parties d'extrémités (8, 9).

2. Robinet à serrage selon la revendication 1, caractérisé en ce que les deux pièces moulées en matière plastique (2, 3) sont reliées l'une à l'autre de façon rabattable, au moyen d'une charnière en film (4).

3. Robinet à serrage selon la revendication 1, caractérisé en ce que l'organe d'actionnement (22) est encliqueté à rotation avec la came (24) dans la première pièce moulée en matière plastique (3) du boîtier.

4. Robinet à serrage selon la revendication 1, caractérisé en ce qu'un organe de prise (23) est réalisé d'un seul tenant sur l'organe d'actionnement (22).

5. Robinet de serrage selon la revendication 1, caractérisé en ce qu'il peut être amené, de sa position de fermeture à sa position d'ouverture et vice-versa, par une rotation de la came (24) d'environ 90°.

6. Robinet de serrage selon la revendication 1, caractérisé en ce que l'élément de tube souple (5) se compose d'une matière de silicone.
